# EUROPEAN PATENT APPLICATION

(11) **EP 1 811 750 A1**
(43) Date of publication of application: **25.07.2007**
(21) Application number: 05793401.0
(22) Date of filing: 17.10.2005
(51) Int. Cl.: H04M 1/02, H04M 1/21

(54) **PORTABLE INFORMATION TERMINAL**

(30) Priority: 09.11.2004 JP 2004324575
(71) Applicant: SHARP KABUSHIKI KAISHA, Osaka-shi, Osaka 545-8522 (JP)
(72) Inventor: OHKI, Kunihiro, 6190238 (JP); TAKATA, Hidenori, 7370915 (JP)
(74) Representative: Brown, Kenneth Richard
(86) International application number: PCT/JP2005/019009
(87) International publication number: WO 2006/051669

(57) **Abstract**

A portable information terminal includes a body section (1) having a liquid crystal display screen (3) and a speaker (4, 5) on a front face thereof, a pull-out section (2) having a liquid crystal display/input screen (20) facing the same direction as the first screen and a microphone (11). The pull-out section (2) is provided to be slidably moved relative to the inside of the body section (1). Accordingly, by pulling out the pull-out section (2), multiple pieces of information can be displayed using both of the screens (3, 20). Further, since the liquid crystal display screen (3) is always exposed outside, the screen can be viewed quickly with one hand.

## Description

### Technical Field

The present invention relates to a portable information terminal, and more particularly to a portable information terminal such as a portable telephone with a television.

### Background Art

Generally, a portable telephone has a vertically long shape. In a folding-type portable telephone, an upper unit is provided with a vertically long liquid crystal display screen, a lower unit is provided with an information input section having various keys, and the portable telephone is folded with the liquid crystal display screen and the information input section facing each other. There is also disclosed a portable telephone rotatably and slidably supporting an upper unit to allow a liquid crystal display screen to be switched from a vertically long display mode to a horizontally long display mode in order to facilitate viewing a horizontally long image and text information (see for example Japanese Patent Laying-Open No. 2003-319043 (Patent Document 1)). Further, development of a portable telephone with a television receiving and displaying digital terrestrial television broadcasting is proceeding.

Patent Document 1: Japanese Patent Laying-Open No. 2003-319043

### Disclosure of the Invention

### Problems to be Solved by the Invention

When a portable telephone with a television is configured in the form of a conventional portable telephone, however, there is caused a problem as described below. That is, while it is required in digital terrestrial television broadcasting to receive and display a picture and text information simultaneously, it is difficult for a user to view a picture and text information if they are simultaneously displayed on one liquid crystal display screen.

Further, since a folding-type portable telephone is folded with a liquid crystal display screen facing inside, a user cannot view the liquid crystal display screen without opening the portable telephone. Therefore, the user is unable to quickly view the display screen of a folding-type portable telephone taken out of his or her bag or pocket, with one hand.

Consequently, one main object of the present invention is to provide a portable information terminal capable of displaying multiple pieces of information and allowing a user to quickly view a display screen with one hand.

### Means for Solving the Problems

A portable information terminal in accordance with the present invention includes a body section having a first screen and a speaker on a front face thereof, a pull-out section having a second screen facing the same direction as the first screen, and a microphone and an information input unit provided in at least one of the body section and the pull-out section. The pull-out section is provided to be slidably moved relative to the body section, and can be accommodated into the body section and pulled out from the body section. Accordingly, by pulling out the pull-out section, multiple pieces of information can be displayed using both of the first screen and the second screen. Further, since the first screen is always exposed outside, the first screen can be viewed quickly with one hand.

Preferably, at least one of the first screen and the second screen is formed of a touch panel, and also serves as the information input unit. In this case, a small-sized device can be provided.

Preferably, the portable information terminal includes input mode selection means selectively setting an information input mode for the touch panel to one of a plurality of information input modes including such as a 10-key input mode, a Japanese syllabary key input mode, a typewriter key input mode, and a handwriting pad input mode. In this case, a user can freely select the most appropriate information input mode for him or her, and readily input information.

Preferably, the portable information terminal includes image selection means causing each of the first screen and the second screen to selectively display a received or recorded television picture, text, information, an image of a user, an image of a communication partner, an image being picked up, a recorded image, or the like. In this case, digital terrestrial television broadcasting can be viewed with ease for example by displaying a television picture and text information on the first screen and the second screen, respectively.

Preferably, a recess for placing fingertips is provided at a predetermined position in a rear face of the body section. In this case, a user can hold the portable information terminal stably for a long time.

Further, another portable information terminal in accordance with the present invention is a foldable portable information terminal including first and second casings coupled by a hinge unit, including a first screen provided on a front face of the first casing to be exposed outside when the portable information terminal is folded, a second screen and an information input unit provided on a front face of the second casing to face the same direction as the first screen when the portable information terminal is opened, and a speaker and a microphone provided in at least one of the first casing and the second casing. Accordingly, by opening the portable information terminal, multiple pieces of information can be displayed using both of the first screen and the second screen. Further, since the first screen is always exposed outside, the first screen can be viewed quickly with one hand.

Preferably, the portable information terminal includes a third screen provided on a rear face of the first casing, and a fourth screen provided on a rear face of the second casing to face the same direction as the third screen when the portable information terminal is opened. Accordingly, by opening the portable information terminal, multiple pieces of information can be displayed using both of the third screen and the fourth screen.

Preferably, the portable information terminal includes image selection means causing each of the first, second, third, and fourth screens to selectively display a received or recorded television picture, text information, an image of a user, an image of a communication partner, an image being picked up, a recorded image, or the like. In this case, digital terrestrial television broadcasting can be viewed with ease for example by displaying a television picture and text information on the first screen and the second screen, respectively. Further, television pictures of different programs can be displayed on the third screen and the fourth screen.

### Effects of the Invention

As described above, according to the portable information terminal in accordance with the present invention, multiple pieces of information can be displayed using both of the first screen and the second screen. Further, since the first screen is always exposed outside, the first screen can be viewed quickly with one hand.

### Brief Description of the Drawings

Fig. 1 is a view showing a structure of a portable telephone with a television in accordance with a first embodiment of the present invention.
Fig. 2 is a view showing a manner of using the portable telephone with a television shown in Fig. 1.
Fig. 3 is another view showing a manner of using the portable telephone with a television shown in Fig. 1.
Fig. 4 is still another view showing a manner of using the portable telephone with a television shown in Fig. 1.
Fig. 5 is a view showing contents displayed on a liquid crystal display screen and a liquid crystal display/input screen shown in Fig. 4.
Fig. 6 is a view showing a manner of using the portable telephone with a television shown in Fig. 4.
Fig. 7 is another view showing contents displayed on the liquid crystal display screen and the liquid crystal display/input screen shown in Fig. 4.
Fig. 8 is still another view showing contents displayed on the liquid crystal display screen and the liquid crystal display/input screen shown in Fig. 4.
Fig. 9 is still another view showing contents displayed on the liquid crystal display screen and the liquid crystal display/input screen shown in Fig. 4.
Fig. 10 is still another view showing contents displayed on the liquid crystal display screen and the liquid crystal display/input screen shown in Fig. 4.
Fig. 11 is a view for illustrating an operation of speakers shown in Fig. 1.
Fig. 12 is another view for illustrating an operation of the speakers shown in Fig. 1.
Fig. 13 is still another view for illustrating an operation of the speakers shown in Fig. 1.
Fig. 14 is still another view for illustrating an operation of the speakers shown in Fig. 1.
Fig. 15 is a block diagram showing a structure of the portable telephone with a television shown in Figs. 1 to 14.
Fig. 16 is a view showing a modification of the first embodiment.
Fig. 17 is a view showing another modification of the first embodiment.
Fig. 18 is a view showing a structure of a folding-type portable telephone with a television in accordance with a second embodiment of the present invention.
Fig. 19 is a view showing a manner of using the folding-type portable telephone with a television shown in Fig. 18.
Fig. 20 is another view showing a manner of using the folding-type portable telephone with a television shown in Fig. 18.
Fig. 21 is a view showing contents displayed on liquid crystal display screens on a rear face of the folding-type portable telephone with a television shown in Fig. 18.
Fig. 22 is a block diagram showing a structure of the folding-type portable telephone with a television shown in Figs. 18 to 21.

### Description of the Reference Signs

1 body section, 2 pull-out section, 3, 44, 50, 61, 62 liquid crystal display screen, 4, 5, 45, 46, 64, 65 speaker, 4a, 4b, 5a, 5b sub-speaker, 6, 18, 47, 67 camera, 7, 14, 51, 58 function key, 8, 15, 52, 59 search key, 9, 16, 53, 60 determination key, 10 tab portion, 11, 56 microphone, 12 shutter key, 13, 57 volume key, 17 recess, 19, 55 stand, 20 liquid crystal display/input unit, 20a input mode switch key, 21, 71 operation unit, 22, 23, 72, 73 antenna, 24, 74 wireless unit for telephone, 25, 75 television receiving unit, 26, 78 direction detecting unit, 28, 76 ROM, 27, 77 RAM, 29, 79 control unit, 30, 31 diversity antenna, 41, 42 casing, 43 hinge unit, 54 input key, 63, 66 microphone/speaker.

### Best Modes for Carrying Out the Invention

### First Embodiment

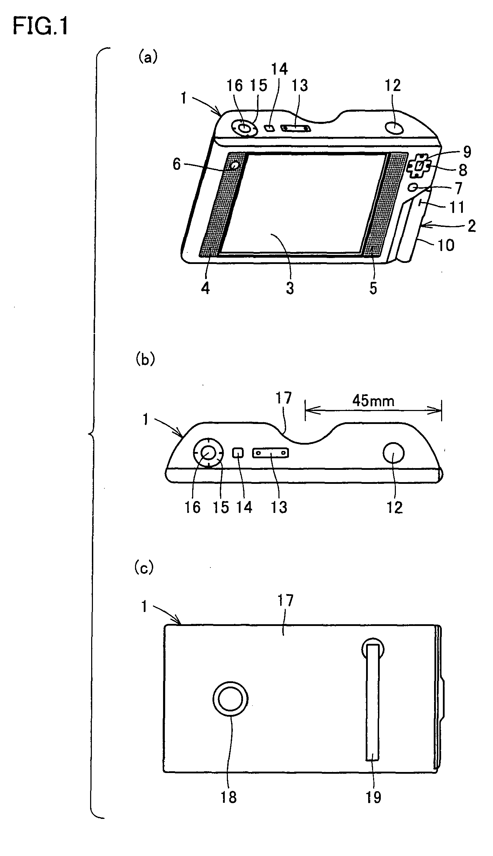

Fig. 1(a), Fig. 1(b), and Fig.1(c) are a perspective view, a top view, and a rear view showing a structure of a portable telephone with a television in accordance with a first embodiment of the present invention, respectively. In Figs. 1(a) to (c), the portable telephone with a television includes a body section 1 in the shape of a thin rectangular solid, and a pull-out section 2 accommodated in body section 1. Body section 1 has a horizontally long rectangular front face, and a horizontally long liquid crystal display screen 3 is provided in a central portion of the front face. Liquid crystal display screen 3 selectively displays a received or recorded television picture, text information, an image of a user, an image of a communication partner, an image being picked up, a recorded image, or the like.

On the front face of body section 1, speakers 4 and 5 are provided on left and right sides of liquid crystal display screen 3, respectively. The user can enjoy stereophonic sound from left and right speakers 4 and 5. Left speaker 4 can also be used as a speaker for telephone conversation. The upper end portion of left speaker 4 is provided with a camera 6 for picking up the user's own image. Further, the upper right end portion of the front face of body section 1 is provided with a function key 7, a search key 8, and a determination key 9. Selection of a television receiving mode or a portable telephone mode, selection of a television channel, and the like can be performed by operating these keys 7 to 9.

A tab portion 10 for pulling out pull-out section 2 is exposed at the lower right end portion of the front face of body section 1. A microphone 11 for telephone conversation is provided in tab portion 10. Instead of or in addition to microphone 11, a microphone for telephone conversation may be provided within right speaker 5.

The top face of body section 1 is provided with a shutter key 12 for the camera, a volume key 13, a function key 14, a search key 15, and a determination key 16. Keys 13 to 16 and keys 7 to 9 are used for the same purposes. Keys 7 to 9 are used when the user holds body section 1 in a horizontally long state, and keys 13 to 16 are used when the user holds body section 1 in a vertically long state.

A recess 17 for placing fingertips is provided in a central portion of a rear face of body section 1 (at a position 45 mm away from the left and right ends). A camera 18 for picking up an image of a subject is provided on one side with respect to recess 17, and a stand 19 is provided on the other side with respect to recess 17. Stand 19 is accommodated in a groove in the rear face of body section 1, and provided such that its lower end can be pulled out with its upper end serving as a pivot point.

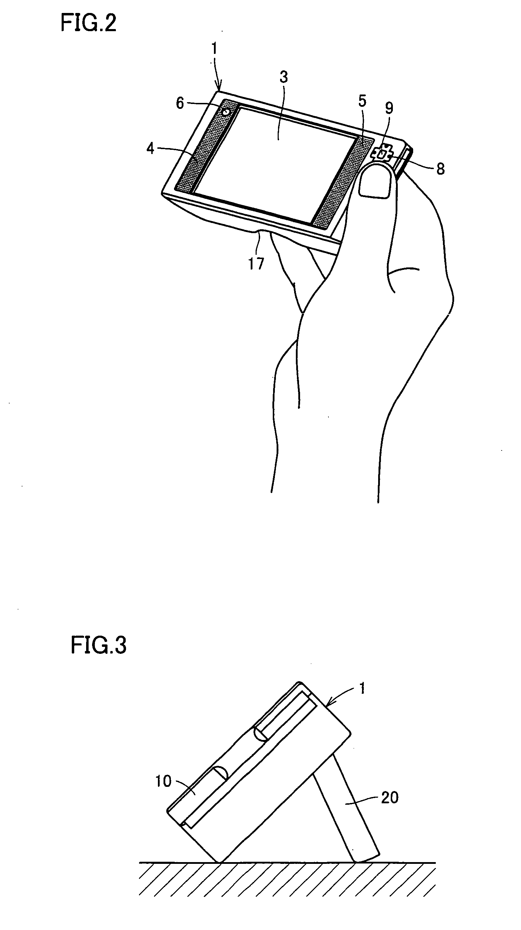

Figs. 2 and 3 are views each showing a manner of using the portable telephone with a television in a horizontally long state, with pull-out section 2 accommodated in body section 1. When the user holds the portable telephone and watches a television picture or the like, it is suggested to place the right index finger to little finger in recess 17 in the rear face of body section 1, and hold the right end portion of the front face of body section 1 with the right thumb, as shown in Fig. 2. Thereby, the portable telephone can be held steadily without requiring much force of the fingers. For example, even when the user uses the portable telephone for a long time while standing in a bumpy crowded train, his or her hand is less tired. Further, since the user's thumb has a high degree of freedom, the user can readily operate keys 7 to 9. Furthermore, since liquid crystal display screen 3 is always exposed outside, the user can take the portable telephone out of his or her bag or pocket and quickly view the display screen with one hand. In addition, when stand 20 is pulled out to stand body section 1 at an angle for example on a desk as shown in Fig. 3, the user can watch pictures for a long time while sitting in a chair.

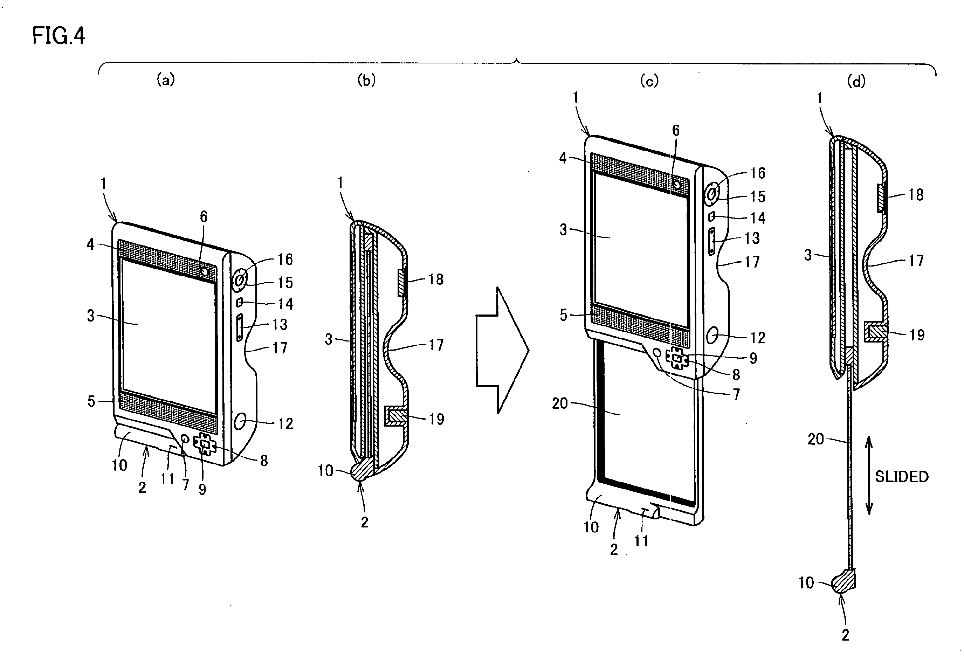

Fig. 4(a) is a perspective view showing a case where the portable telephone with a television is used in a vertically long state, Fig. 4(b) is a cross-sectional view in that case, Fig. 4(c) is a perspective view showing a state in which pull-out section 2 is pulled out, and Fig. 4(d) is a cross-sectional view in that state. In Figs. 4(a) and (b), the portable telephone with a television can also be used in a vertically long state. The portable telephone is designed such that, even in this state, an image is displayed with the top and the bottom thereof positioned correctly, instead of being displayed in a state rotated by 90 degrees, and sound is heard from the left and right sides, which will be described later. Further, pull-out section 2 is provided to be slidable relative to body section 1, and thus it can be accommodated in body section 1 and pulled out from body section 1.

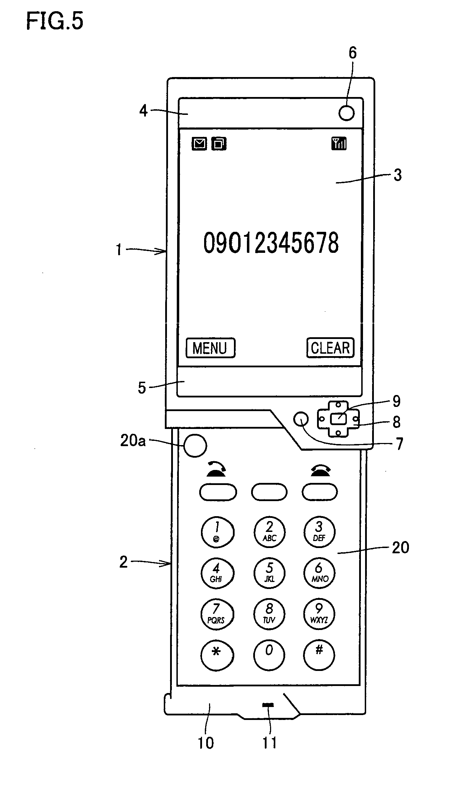

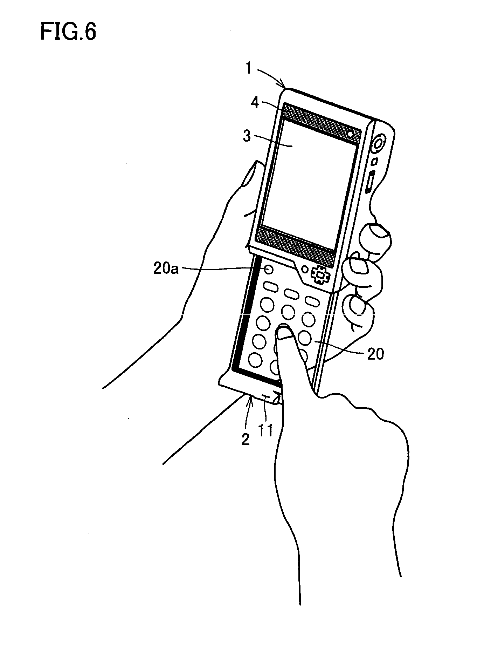

As shown in Figs. 4(c) and (d), pull-out section 1 pulled out from body section 1 is provided with a liquid crystal display/input screen (touch panel) 20 having the same dimensions as those of liquid crystal display screen 3 in body section 1. When body section 1 is positioned in a vertically long state and pull-out section 2 is pulled out, the portable telephone with a television is placed in a portable telephone mode, and a 10-key type information input unit as in a typical portable telephone is displayed on liquid crystal display/input screen 20, as shown in Fig. 5. When the user holds body section 1 with his or her left hand and operates keys with his or her right index finger as shown in Fig. 6, the user can use the portable telephone with a television in the same way as a typical portable telephone. When the user puts speaker 4 at the upper end portion of body section 1 to his or her ear and places microphone 11 at the lower end portion of pull-out section 2 close to his or her mouth, the user can talk over the telephone.

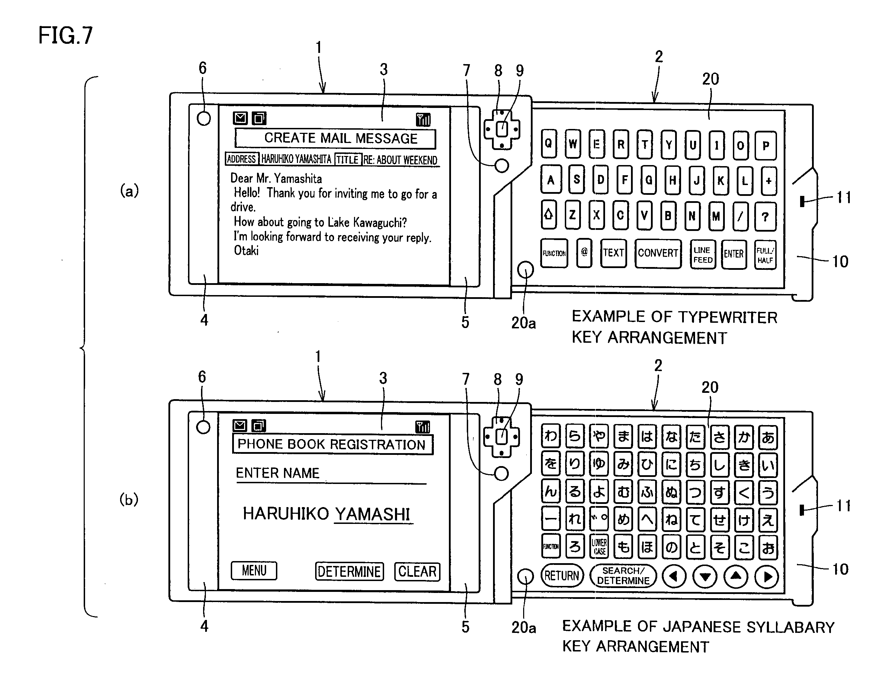

Further, switching between information input modes can be performed and contents displayed on liquid crystal display/input screen 20 can be changed by touching an input mode switch key 20a displayed on a predetermined position in liquid crystal display/input screen 20. For example, if switch key 20a is touched once when the 10-key input mode of Fig. 5 is set, the contents displayed on liquid crystal display/input screen 20 are switched, and keys including A to Z keys laid out in the typewriter key arrangement are displayed on liquid crystal display/input screen 20 in a horizontally long manner as shown in Fig. 7(a). Liquid crystal display screen 3 also provides a horizontally long display. If switch key 20a is touched once more when the typewriter key input mode of Fig. 7(a) is set, the contents displayed on liquid crystal display/input screen 20 are once more switched, and keys including Japanese Hiragana keys laid out in the Japanese syllabary key arrangement are displayed on liquid crystal display/input screen 20 in a horizontally long manner as shown in Fig. 7(b). Liquid crystal display screen 3 also provides a horizontally long display.

If switch key 20a is touched once more when the Japanese syllabary key input mode of Fig. 7(b) is set, the contents displayed on liquid crystal display/input screen 20 are once more switched and returned to those of the 10-key input mode of Fig. 5. The user can create a mail message or perform phone book registration on liquid crystal display screen 3 by selecting a desired information input mode and operating displayed keys. Therefore, this facilitates information input for many users. In particular, this is highly effective for middle-aged and older users who have difficulties in inputting information in the conventional 10-key mode.

It is needless to say that the contents displayed on liquid crystal display/input screen 20 can be changed using function key 7, search key 8 and determination key 9, without using switch key 20a. Further, liquid crystal display/input screen 20 may serve as a handwriting pad. Further, the shape, color, and size of the keys, a text font type, and the like may be changeable. Furthermore, liquid crystal display screen 3 in body section 1 may also be formed of a touch panel, and the portable telephone may be configured such that the user can make a phone call with pull-out section 2 accommodated in body section 1.

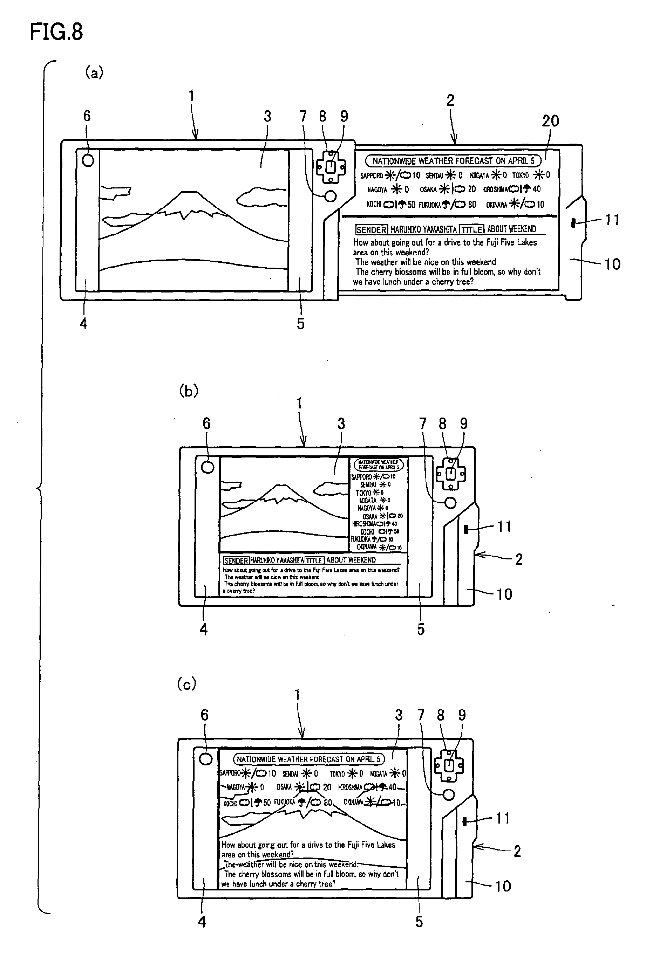

Fig. 8(a) is a view showing a manner of displaying a television program with pull-out section 2 pulled out from body section 1. In Fig. 8(a), a television program broadcasted by digital terrestrial television broadcasting is displayed on liquid crystal display screen 3 in a horizontally long manner, and text information such as data broadcasting and e-mail is displayed on liquid crystal display/input screen 20 in a horizontally long manner. Since a television picture and text information are displayed on the left and right screens, respectively, in this case, the user can enjoy watching a large and beautiful television picture, and can read the text information readily and correctly.

Although it is also possible to accommodate pull-out section 2 in body section 1, divide liquid crystal display screen 3 into three, and display a television picture, text information from data broadcasting, and contents of a mail message separately on the divided three screens as shown in Fig. 8(b), they are each displayed in a small size, and thus cannot easily be viewed. Further, although it is also possible to accommodate pull-out section 2 in body section 1 and display a television picture, text information from data broadcasting, and contents of a mail message on liquid crystal display screen 3 in a superimposed manner as shown in Fig. 8(c), they cannot easily be viewed and thus the user cannot enjoy watching the television picture.

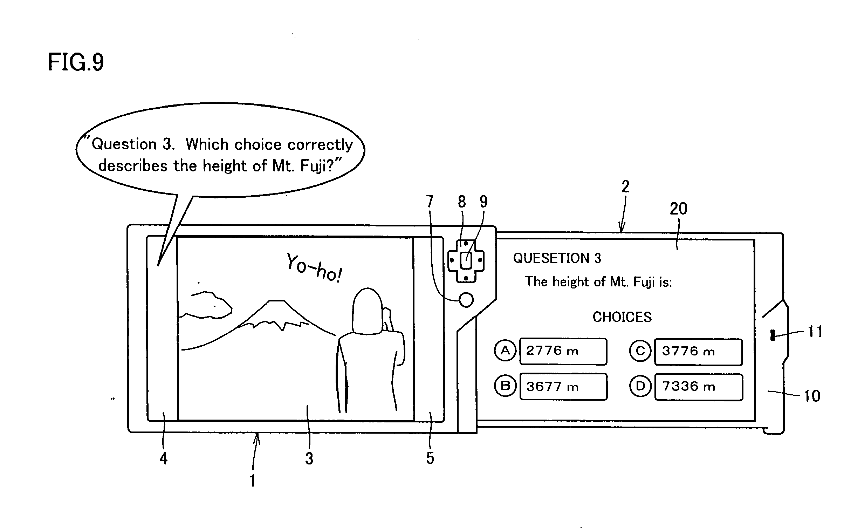

Further, as shown in Fig. 9, operation keys and operation guides for various input modes can be displayed on liquid crystal display/input screen 20 on the right side, corresponding to a picture displayed on liquid crystal display screen 3 on the left side. For example, a question and choices related to a picture displayed on liquid crystal display screen 3 may be displayed on liquid crystal display/input screen 20 serving as a touch panel to allow a user to participate in a television program by operating liquid crystal display/input screen 20. Thereby, interactive communication function of digital terrestrial television broadcasting can be utilized effectively.

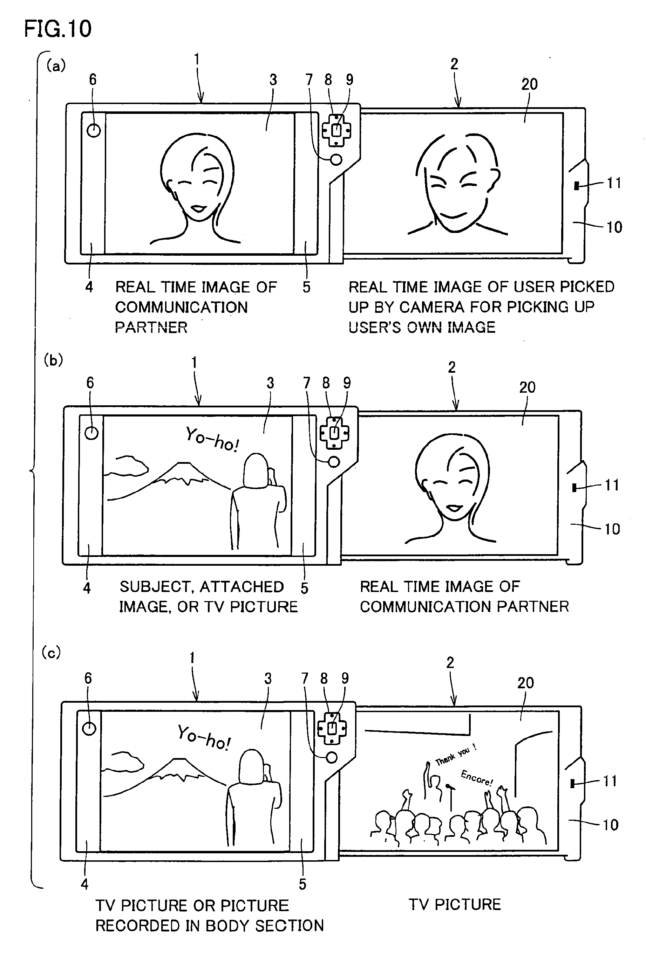

Further, the user can talk with a communication partner using speakers 4 and 5 and microphone 11, with a real time image of the communication partner displayed on left screen 3, and an image of the user picked up by camera 6 for picking up the user's own image displayed on right screen 20 as shown in Fig. 10(a).

Further, as shown in Fig. 10(b), a picture which is the topic of conversation with a communication partner can be displayed on left screen 3, and a real time image of the communication partner can be displayed on right screen 20. Examples of the picture which is the topic of conversation include a picture of a subject picked up by camera 18 provided on the rear face or body section 1 shown in Fig. 1, an image wmcn has been recorded in body section 1 and is attached on screen 3, an image which has been transmitted from a communication partner and is attached on screen 3, and a television picture.

Further, as shown in Fig. 10(c), a television picture or a picture which has been recorded in body section 1 can be displayed on left screen 3, and a television picture of a television program different from that displayed on left screen 3 can be displayed on right screen 20.

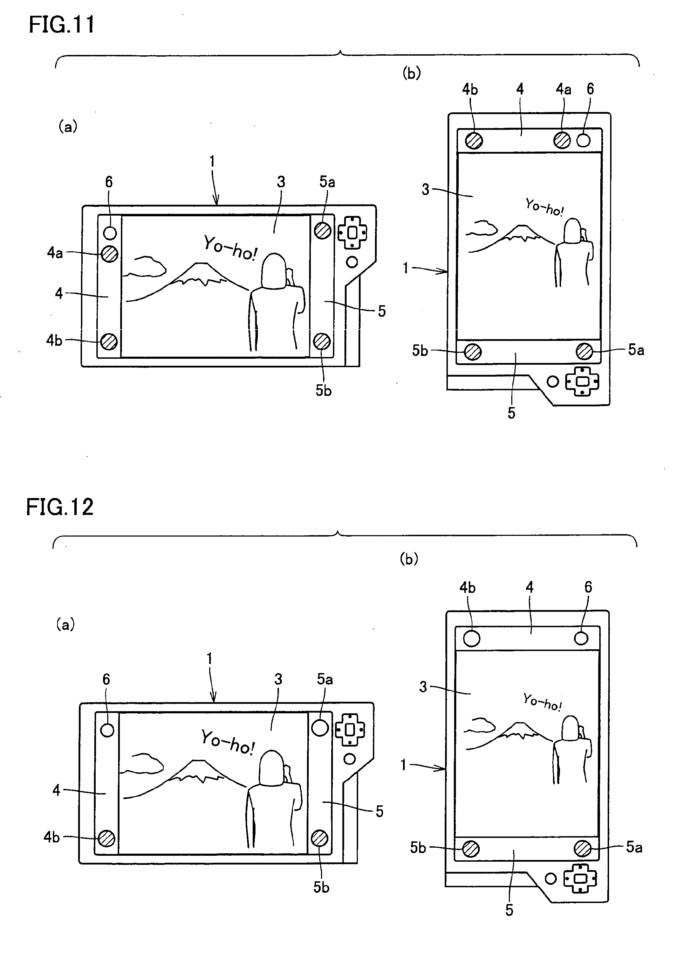

A description will now be given of switching of the operation of speakers 4 and 5 when the portable telephone with a television is used in a horizontally long state and in a vertically long state. As shown in Fig. 11(a), speaker 4 includes two sub-speakers 4a and 4b disposed at an upper end portion and a lower end portion, respectively, and speaker 5 includes two sub-speakers 5 a and 5b disposed at an upper end portion and a lower end portion, respectively. When body section 1 is used in a horizontally long state, sub-speakers 4a and 4b are used as left speakers, and sub-speakers 5a and 5b are used as right speakers.

When body section 1 is used in a vertically long state, sub-speakers 4b and 4a are disposed on the left and right sides, respectively, of the upper end portion of body section 1, and sub-speakers 5b and 5a are disposed on the left and right sides, respectively, of the lower end portion of body section 1, as shown in Fig. 11(b). Sub-speakers 4b and 5b are used as left speakers, and sub-speakers 4a and 5a are used as right speakers.

Specifically, sub-speaker 4a is used as a left speaker when body section 1 is used in a horizontally long state, and used as a right speaker when body section 1 is used in a vertically long state. Sub-speaker 4b is used as a left speaker irrespective of whether body section 1 is used in a horizontally long state or in a vertically long state. Sub-speaker 5a is used as a right speaker irrespective of whether body section 1 is used in a horizontally long state or in a vertically long state. Sub-speaker 5b is used as a right speaker when body section 1 is used in a horizontally long state, and used as a left speaker when body section 1 is used in a vertically long state. Whether body section 1 is used in a horizontally long state or in a vertically long state is detected by a direction detecting unit which will be described later, and switching of sub-speakers 4a, 4b, 5a, and 5b is controlled in accordance with a result detected by the direction detecting unit.

It is to be noted that body section 1 may have no sub-speaker 4a as shown in Figs. 12(a) and (b). When body section 1 is used in a horizontally long state as shown in Fig. 12(a), sub-speaker 4b may be used as a left speaker and sub-speaker 5b may be used as a right speaker. When body section 1 is used in a vertically long state as shown in Fig. 12(b), sub-speaker 5b may be used as a left speaker and sub-speaker 5a may be used as a right speaker.

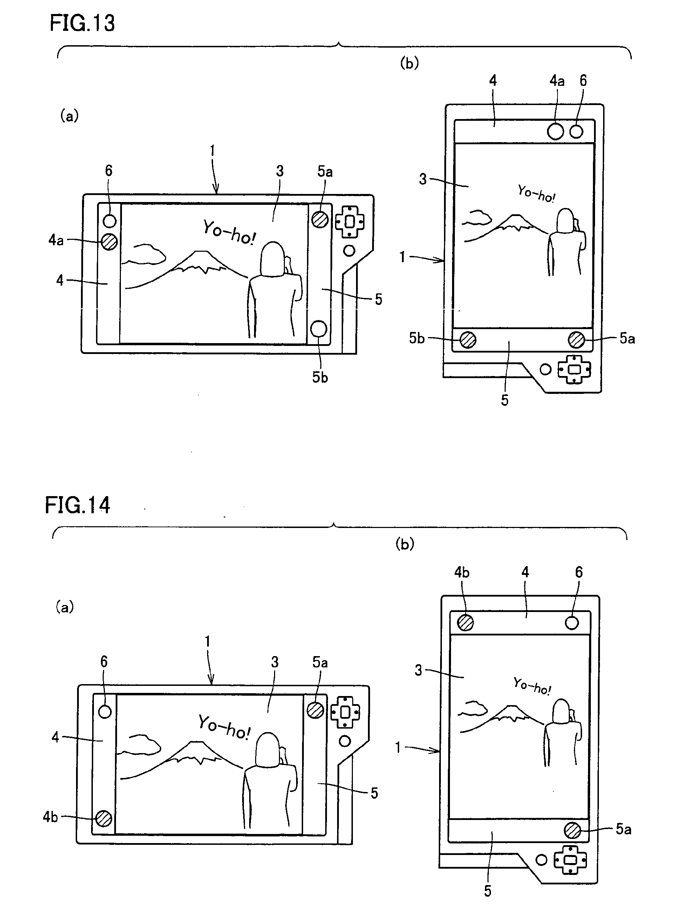

Further, body section 1 may have no sub-speaker 4b as shown in Figs. 13(a) and (b). When body section 1 is used in a horizontally long state as shown in Fig. 13(a), sub-speaker 4a may be used as a left speaker and sub-speaker 5a may be used as a right speaker. When body section 1 is used in a vertically long state as shown in Fig. 13(b), sub-speaker 5b may be used as a left speaker and sub-speaker 5a may be used as a right speaker.

Furthermore, body section 1 may have no sub-speakers 4a and 5b as shown in Figs. 14(a) and (b), and sub-speaker 4b may be used as a left speaker and sub-speaker 5a may be used as a right speaker, irrespective of whether body section 1 is used in a horizontally long state or in a vertically long state.

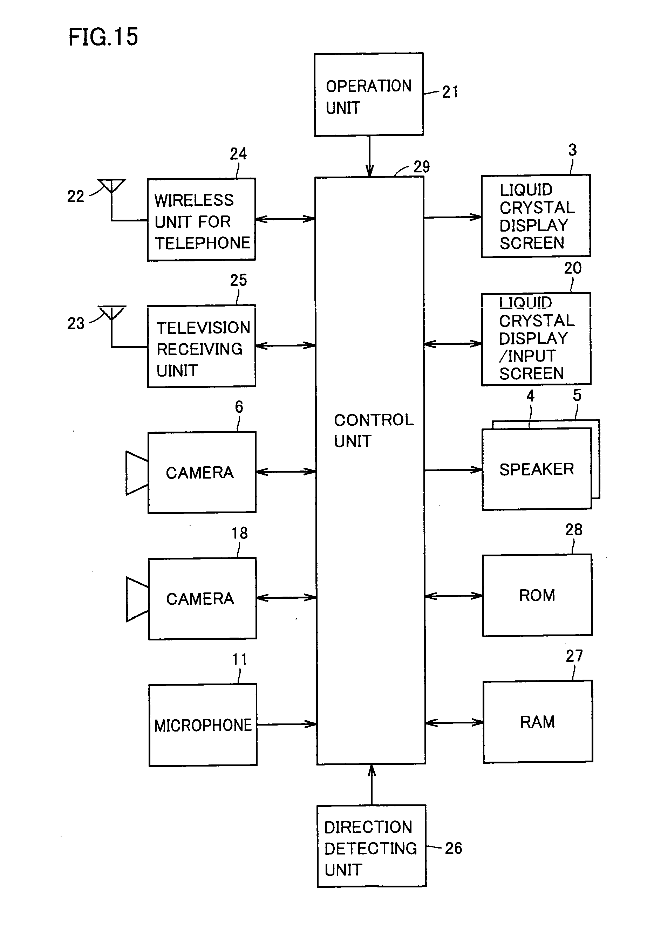

Fig. 15 is a block diagram showing a structure of the portable telephone with a television. In Fig. 15, in addition to liquid crystal display screen 3, liquid crystal display/input screen 20, speakers 4 and 5, cameras 6 and 18, and microphone 11, the portable telephone with a television includes an operation unit 21, antennas 22 and 23, a wireless unit 24 for telephone, a television receiving unit 25, a direction detecting unit 26, a RAM (Random Access readwrite Memory) 27, a ROM (Read Only Memory) 28, and a control unit 29.

Operation unit 21 includes functional keys 7 and 14, search keys 8 and 15, determination keys 9 and 16, shutter key 12, and volume key 13, and operates the portable telephone with a television. Wireless unit 24 for telephone receives a telephone signal from a telephone base station via antenna 22, converts the received telephone signal into a sound signal, a picture signal, and text information, and supplies them to control unit 29. Further, wireless unit 24 for telephone generates a telephone signal based on a sound signal, a picture signal, and text information supplied from control unit 29, and transmits the generated telephone signal to a base station via the antenna.

Television receiving unit 25 receives a high frequency signal from a broadcasting station via antenna 23, extracts a picture signal, a sound signal, and text information of a desired program from the received high frequency signal based on a station selection signal supplied from control unit 29, and supplies the extracted picture signal and the like to control unit 29. Further, television receiving unit 25 transmits text information supplied from control unit 29 to a broadcasting station via antenna 23.

Direction detecting unit 26 detects whether the portable telephone with a television is used in a horizontally long state or in a vertically long state, and supplies a signal indicating the result of detection to control unit 29. RAM 27 is controlled by control unit 29, and records various pieces of text information, a picture received by wireless unit 24 for telephone and television receiving unit 25, a picture picked up by cameras 6 and 18, and the like. ROM 28 stores various programs, an image and text information to be displayed on liquid crystal display screen 3 and liquid crystal display/input screen 20, voice information, and the like.

Control unit 29 controls the entire portable telephone with a camera based on signals from operation unit 21, liquid crystal display/input screen 20, and direction detecting unit 26. For example, control unit 29 selects one of a plurality of images of input modes recorded in ROM 28 including the 10-key input mode, the Japanese syllabary key input mode, the typewriter key input mode, and handwriting pad input mode, based on the signals from operation unit 21, liquid crystal display/input screen 20, and direction detecting unit 26, and causes liquid crystal display/input screen 20 to display the selected image.

Further, control unit 29 causes each of screens 3 and 20 to selectively display one of a picture and text information received by wireless unit 24 for telephone and television receiving unit 25, an image of a communication partner, a picture and text information recorded in RAM 27 and ROM 28, a picture picked up by cameras 6 and 18, an image of the user, and the like, based on the signals from operation unit 21, liquid crystal display/input screen 20, and direction detecting unit 26.

Furthermore, when the portable telephone with a television is used in a horizontally long state, control unit 29 causes screens 3 and 20 to display a horizontally long image, and controls speakers 4 and 5 (sub-speakers 4a, 4b, 5a, and 5b) as described with reference to Fig. 11(a), based on the signal from direction detecting unit 26. When the portable telephone with a television is used in a vertically long state, control unit 29 causes screens 3 and 20 to display a vertically long image, and controls speakers 4 and 5 (sub-speakers 4a, 4b, 5a, and 5b) as described with reference to Fig. 11(b), based on the signal from direction detecting unit 26.

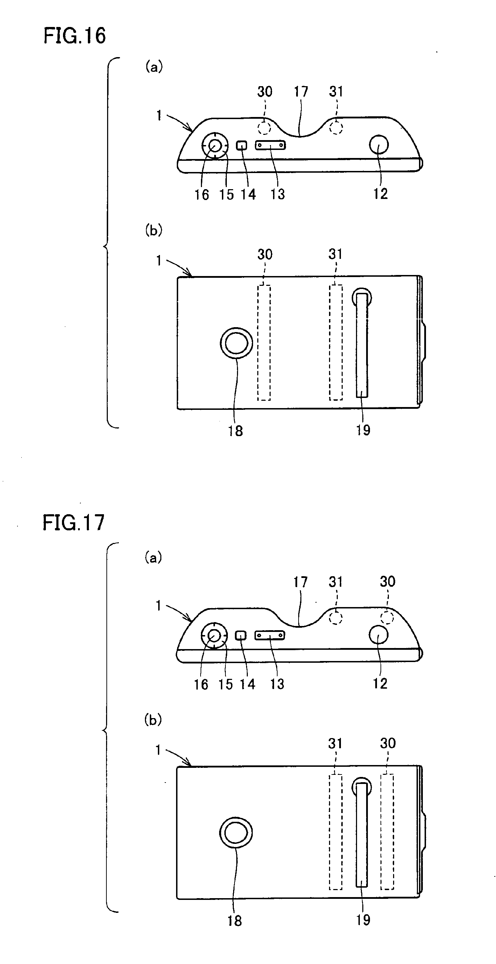

It is to be noted that, as shown in Fig. 16, a plurality of (for example two) diversity antennas 30 and 31 for wireless unit 24 for telephone or television receiving unit 25 may be provided on both sides of recess 17 in the rear face of body section 1, and one of the antennas which is in a better communication status may be used. Further, as shown in Fig. 17, diversity antenna 30 may be provided at an end of the rear face of body section 1, and diversity antenna 31 may be provided at an end of recess 17. By providing antennas 30 and 31 at a corner of the rear face of body section 1 in this manner, antennas 30 and 31 are less blocked by a conductor, and thus reception status can be improved.

### Second Embodiment

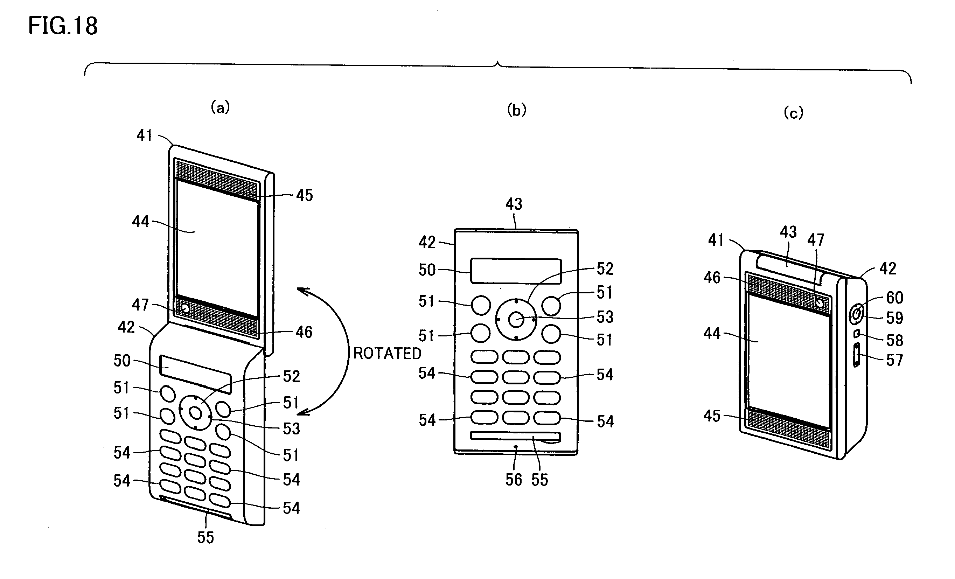

Fig. 18(a) is a perspective view of a folding-type portable telephone with a television in accordance with a second embodiment of the present invention, seen from the front when it is opened, Fig. 18(b) is a perspective view thereof seen from the front when it is closed, and Fig. 18(c) is a perspective view thereof seen from the rear when it is closed. In Figs. 18(a) to (c), the folding-type portable telephone with a television includes two vertically-long casings 41 and 42 coupled by a hinge unit 43. Hinge unit 43 is provided at a shorter side of casings 41 and 42, and casings 41 and 42 are provided to be foldable about hinge unit 43.

Casing 41 is provided with a vertically-long liquid crystal display screen 44 in a central portion thereof, and speakers 45 and 46 are provided above and below liquid crystal display screen 44, respectively. A camera 47 is provided at an end portion of speaker 46.

Casing 42 is provided with a liquid crystal display screen 50 in an upper portion thereof, a plurality of function keys 51, a search key 52, and a determination key 53 in a central portion thereof, a plurality of input keys 54 in a lower portion thereof, and a stand 55 and a microphone 56 in a lower end portion thereof. Further, casing 42 is provided with a volume key 57, a function key 58, a search key 59, and a determination key 60 on a side face thereof. Determination keys 53 and 60 also serve as shutter keys.

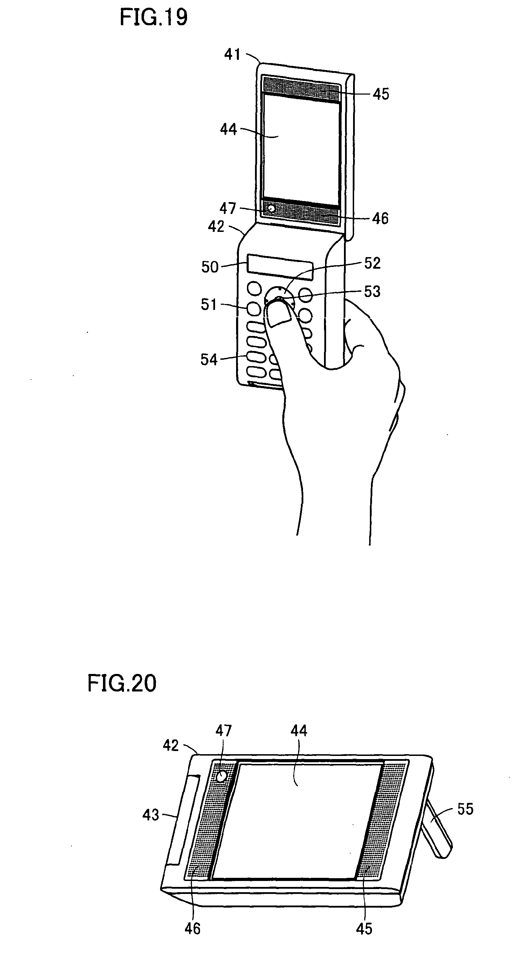

The folding-type portable telephone with a television can be used as a typical portable telephone when the user holds the opened portable telephone in his or her hand with its front face facing the user as shown in Fig. 19. Further, the user can watch digital terrestrial television broadcasting in this state. On this occasion, a television picture is displayed on liquid crystal display screen 44, and text information is displayed on liquid crystal display screen 50. Since a television picture and text information are displayed on the upper and lower screens, respectively, in this case, the user can enjoy watching a large and beautiful television picture, and can read the text information readily and correctly.

Further, when the portable telephone is folded and placed on a desk in a horizontally long manner with liquid crystal display screen 44 facing forward and stand 55 pulled out as shown in Fig. 20, the user can watch a television program for a long time without fatigue. As in the first embodiment, when liquid crystal display screen 44 is used in a vertically long state, a vertically long image is displayed thereon, and when liquid crystal display screen 44 is used in a horizontally long state, a horizontally long image is displayed thereon. Speakers 45 and 46 output sound from both sides irrespective of whether liquid crystal display screen 44 is used in a vertically long state or in a horizontally long state.

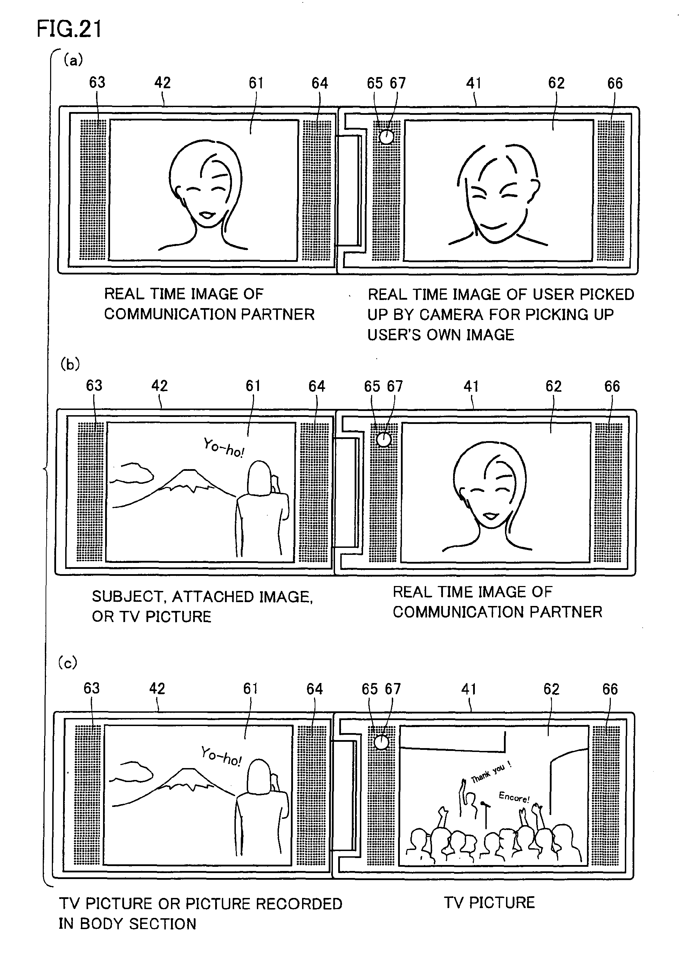

Figs. 21(a) to (c) show a rear face of the folding-type portable telephone with a television when it is opened in a horizontally long state. In Figs. 21(a) to (c), horizontally-long liquid crystal display screens 61 and 62 are provided on rear faces of casings 42 and 41, respectively, in a central portion of each of the rear faces. On the rear face of casing 42, a microphone/speaker 63 and a speaker 64 are provided on left and right sides of liquid crystal display screen 61, respectively. On the rear face of casing 41, a speaker 65 and a microphone/speaker 66 are provided on left and right sides of liquid crystal display screen 62, respectively. A camera 67 is provided at an upper end portion of speaker 65.

In this state, the user can talk with a communication partner using speakers 64 and 67 and microphone/speakers 63 and 66, with a real time image of the communication partner displayed on left screen 61, and an image of the user picked up by camera 67 for picking up the user's own image displayed on right screen 62 as shown in Fig. 21(a).

Further, as shown in Fig. 21(b), a picture which is the topic of conversation with a communication partner can be displayed on left screen 61, and a real time image of the communication partner can be displayed on right screen 62. Examples of the picture which is the topic of conversation include a picture of a subject picked up by camera 47 provided on the front face of casing 41 shown in Fig. 18(a), an image which has been recorded in a RAM within casing 42 and is attached on screen 61, an image which has been transmitted from a communication partner and is attached on screen 61, and a television picture.

Further, as shown in Fig. 21(c), a television picture or a picture which has been recorded in the RAM within casing 42 can be displayed on left screen 61, and a television picture of a television program different from that displayed on left screen 61 can be displayed on right screen 62.

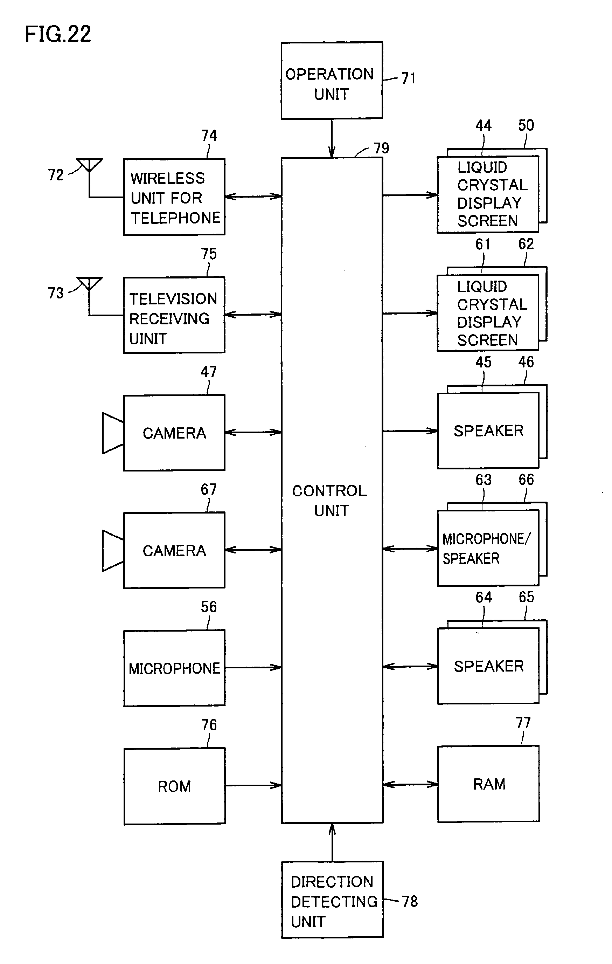

Fig. 22 is a block diagram showing a structure of the folding-type portable telephone with a television. In Fig. 22, in addition to liquid crystal display screens 44, 50, 61, and 62, speakers 44, 46, 64, and 65, microphone/speakers 63 and 66, cameras 47 and 67, and microphone 56, the folding-type portable telephone with a television includes an operation unit 71, antennas 72 and 73, a wireless unit 74 for telephone, a television receiving unit 75, a ROM 76, a RAM 77, a direction detecting unit 78, and a control unit 79.

Operation unit 71 includes functional keys 51 and 58, search keys 52 and 59, determination keys 53 and 60, and volume key 57, and operates the folding-type portable telephone with a television. Wireless unit 74 for telephone receives a telephone signal from a telephone base station via antenna 72, converts the received telephone signal into a sound signal, a picture signal, and text information, and supplies them to control unit 79. Further, wireless unit 74 for telephone generates a telephone signal based on a sound signal, a picture signal, and text information supplied from control unit 79, and transmits the generated telephone signal to a base station via antenna 72.

Television receiving unit 75 receives a high frequency signal from a broadcasting station via antenna 73, extracts a picture signal, a sound signal, and text information of a desired program from the received high frequency signal based on a station selection signal supplied from control unit 79, and supplies the extracted picture signal and the like to control unit 79. Further, television receiving unit 75 transmits text information supplied from control unit 79 to a broadcasting station via antenna 73.

ROM 76 stores various programs, image data, and the like. RAM 77 is controlled by control unit 79, and records various pieces of text information, a picture received by wireless unit 74 for telephone and television receiving unit 75, a picture picked up by cameras 47 and 67, and the like. Direction detecting unit 78 detects whether the folding-type portable telephone with a television is used in a horizontally long state or in a vertically long state, and supplies a signal indicating the result of detection to control unit 79.

Control unit 79 controls the entire folding-type portable telephone with a camera based on signals from operation unit 71 and direction detecting unit 78. For example, control unit 79 causes each of screens 44, 50, 61, and 62 to selectively display one of a picture and text information received by wireless unit 74 for telephone and television receiving unit 75, an image of a communication partner, a picture and text information recorded in RAM 77 and ROM 76, a picture picked up by cameras 47 and 67, an image of the user, and the like, based on the signals from operation unit 71and direction detecting unit 78.

Furthermore, when the folding-type portable telephone with a television is used in a horizontally long state, control unit 79 causes screens 44, 61, and 62 to display a horizontally long image, and controls speakers 45, 46, and 63 to 66 as described with reference to Fig. 11(a), based on the signal from direction detecting unit 78. When the folding-type portable telephone with a television is used in a vertically long state, control unit 79 causes screens 44, 61, and 62 to display a vertically long image, and controls speakers 4, 5, and 63 to 66 as described with reference to Fig. 11(b), based on the signal from direction detecting unit 78.

In the second embodiment, multiple pieces of information can be displayed using both of liquid crystal display screens 44 and 50 or both of liquid crystal display screens 61 and 62. Furthermore, since liquid crystal display screen 44 is always exposed outside, the user can take the folding-type portable telephone out of his or her bag or pocket and quickly view the display screen with one hand.

It should be understood that the disclosed embodiment and examples above are, in all respects, by way of illustration only and are not by way of illustration. The scope of the present invention is set forth by the claims rather than the above description, and is intended to cover all the modifications within a spirit and scope equivalent to those of the claims.

## Claims

1. A portable information terminal, comprising:
a body section (1) having a first screen (3) and a speaker (4, 5) on a front face thereof;
a pull-out section (2) having a second screen (20) facing the same direction as said first screen (3); and
a microphone (11) and an information input unit (20) provided in at least one of said body section (1) and said pull-out section (2),
wherein said pull-out section (2) is provided to be slidably moved relative to said body section (1), and can be accommodated into said body section (1) and pulled out from said body section (1).

2. The portable information terminal according to claim 1, wherein at least one of said first screen (3) and said second screen (20) is formed of a touch panel, and also serves as said information input unit (20).

3. The portable information terminal according to claim 2, comprising input mode selection means (20a) selectively setting an information input mode for said touch panel to one of a plurality of information input modes including such as a 10-key input mode, a Japanese syllabary key input mode, a typewriter key input mode, and a handwriting pad input mode.

4. The portable information terminal according to claim 1, comprising image selection means (21, 29) causing each of said first screen (3) and said second screen (20) to selectively display a received or recorded television picture, text information, an image of a user, an image of a communication partner, an image being picked up, a recorded image, or the like.

5. The portable information terminal according to claim 1, wherein a recess (17) for placing fingertips is provided at a predetermined position in a rear face of said body section (1).

6. A foldable portable information terminal including first and second casings (41, 42) coupled by a hinge unit (43), comprising:
a first screen (44) provided on a front face of said first casing (41) to be exposed outside when said portable information terminal is folded;
a second screen (50) and an information input unit (51 to 54) provided on a front face of said second casing (42) to face the same direction as said first screen (44) when said portable information terminal is opened; and
a speaker (45, 46) and a microphone (56) provided in at least one of said first casing (41) and said second casing (42).

7. The portable information terminal according to claim 6, comprising:
a third screen (62) provided on a rear face of said first casing (41); and
a fourth screen (61) provided on a rear face of said second casing (42) to face the same direction as said third screen (62) when said portable information terminal is opened.

8. The portable information terminal according to claim 7, comprising image selection means (71, 79) causing each of said first, second, third, and fourth screens (44, 50, 62, 61) to selectively display a received or recorded television picture, text information, an image of a user, an image of a communication partner, an image being picked up, a recorded image, or the like.
